(19)

Europäisches
Patentamt

European
Patent Office

Office européen
des brevets

(11)    **EP 3 745 314 B1**

(12)                         **EUROPEAN PATENT SPECIFICATION**

(45) Date of publication and mention
of the grant of the patent:
**19.03.2025  Bulletin 2025/12**

(51) International Patent Classification (IPC):
**G06N 3/084** (2023.01)          **G06N 3/063** (2023.01)
**G06N 3/048** (2023.01)

(21) Application number: **19202059.2**

(22) Date of filing: **08.10.2019**

(52) Cooperative Patent Classification (CPC):
**G06N 3/063; G06N 3/084;** G06N 3/048

(54) **METHOD, APPARATUS AND COMPUTER PROGRAM FOR TRAINING DEEP NETWORKS**

VERFAHREN, VORRICHTUNG UND COMPUTERPROGRAMM ZUM TRAINIEREN VON TIEFEN
NETZWERKEN

PROCÉDÉ, APPAREIL ET PROGRAMME INFORMATIQUE POUR L'APPRENTISSAGE DE
RÉSEAUX PROFONDS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2019  EP 19176815**

(43) Date of publication of application:
**02.12.2020  Bulletin 2020/49**

(73) Proprietor: **Fraunhofer-Gesellschaft zur
Förderung
der angewandten Forschung e.V.
80686 München (DE)**

(72) Inventor: **LOROCH, Dominik Marek
67663 Kaiserslautern (DE)**

(74) Representative: **2SPL Patentanwälte PartG mbB
Landaubogen 3
81373 München (DE)**

(56) References cited:
**US-A1- 2018 211 166**

• **ANONYMOUS: "neural network - How to quantize
weights in forward pass during training in
Keras? - Data Science Stack Exchange", 14
October 2016 (2016-10-14), XP093069082,
Retrieved from the Internet <URL:https%3A%
2F%2Fdatascience.stackexchange.com%
2Fquestions%2F14533%2Fhow-to-quantize-
weights-in-forward-pass-during-training-in-
keras> [retrieved on 20230731]**

**Description**

**Field**

Examples relate to deep learning of neural networks.

**Background**

Document US 2018/211166 A1 proposes a system for distributed deep learning that exchanges locally determined quantized gradients of a parameter among a plurality of learning devices. Each of the plurality of learning devices updates the parameter based on a respective aggregated gradient calculated from the quantized gradients which are received from the other learning devices.

A quantized deep neural network (DNN) is a model of a deep neural network which uses quantization on one or both of its weights and activations. One method may be to store scalar values in a lower precision numerical format, which may require less memory (measured, e.g., in bits per stored value). Further, computation of a DNNs output may be accelerated when using quantized parameters in a lower precision format.

Quantization in DNNs has become an interesting topic for embedded systems as well as for high performance computing (HPC). Quantization is most often used to reduce the memory size of the weights, activations and gradients with different numerical formats, such as fixed point numbers, power of 2, ternary, binary and mixtures of different numerical precisions. A lot of work in this field considers how quantization can improve the design of hardware accelerator architectures for DNNs, reducing the computational complexity.

Some efforts have also been made to improve quantized DNN training, which concentrate on techniques that may be applied to the topology to improve the evaluation score of a quantized DNN. Some approaches switch between a low precision 'compression' and high precision 'learning' phase during training. Nonetheless, optimization schemes for quantized training of DNNs rely on a high precision representation of the weights, and in many cases of higher momentums introduced by update schemes.

In summary, quantization is conventionally perceived as a post-training step to reduce the model complexity and to make execution more efficient, while training of the DNN is performed using unquantized values, hence consuming a lot of memory and computational power.

Therefore, there is a need of a method for deep learning providing a high precision trained network while consuming reasonable processing power.

**Summary**

The invention relates to a computer-implemented method for training a deep network comprising the steps of calculating an intermediate weight of a layer of the deep network based on an existing quantized weight and an existing quantized residual parameter, deriving an updated weight by quantizing the intermediate weight, and generating an updated residual parameter using the intermediate weight and the updated weight. The updated weight is a quantized quantity. Generating the updated residual parameter comprises scaling an intermediate residual parameter with the updated weight and quantizing the scaled intermediate residual parameter to derive the updated residual parameter according to

$$r_{t+1} = q_r \left( \frac{\widetilde{w}_{t+1} - w_{t+1}}{w_{t+1}} \right) \; if \; w_{t+1} \neq 0$$
$$= 0 \quad else$$

with $r_{t+1}$ denoting the updated residual parameter, $\widetilde{w}_{t+1}$ denoting the intermediate weight, $\bar{w}_{t+1}$ denoting the updated weight and $q_r$ denoting a quantization. The method further comprises performing a bit shift operation on the intermediate residual parameter for scaling the intermediate residual parameter with the updated weight

Using a residual parameter holding information on an error caused by a quantized weight, deep learning may be performed with high accuracy while directly using quantized weights, which results in reduced memory requirements and accelerated computation and, consequently, accelerated learning. By scaling an intermediate residual parameter, which may hold the residual in a high accuracy numerical format with the updated weight, the resultant parameter may hold the information on an error in an efficient way at appropriate accuracy. More specifically, the same error may be saved with a lower number of bits. Quantizing the scaled intermediate parameter to derive the updated residual parameter may result in a further reduction of the memory requirements and further acceleration of computations. Performing bit shift operations for scaling may be performed computationally inexpensive and in hardware, hence less processing power may be needed as compared to performing multiplications or divisions for scaling.

In another example, the intermediate weight is quantized using logarithmic quantization.

Using quantization may enable weight values and residual values with a lower number of bits while logarithmic quantization may enable an efficient hardware implementation of subsequent computation steps.

A further example further comprises the step of applying a thresholding mechanism after quantizing the intermediate weight. Using a threshold or a thresholding function ($th_\Delta$) may, for example, serve to disregard values below the threshold, reducing the overall number of bits used for storing the updated weight. For the same reason, less processing power may be needed for processing the weights.

An optional example further comprises the step of using fixed point quantization to derive the updated residual parameter.

Fixed point quantization may lead to a quantized updated residual parameter with a fixed bit number (bit width) which may result in a low quantization error, further enabling efficient hardware implementations. The quantization error may be dependent on the word width and may decrease with a increasing word width.

Another example relates to a processing circuit for training a deep network being configured to calculate an intermediate weight based on an existing quantized weight of a layer of the deep network and an existing quantized residual parameter, derive an updated weight by quantizing the intermediate weight, and generate an updated residual parameter using the intermediate weight and the updated weight. The updated weight is a quantized quantity. The processing circuit is configured to generate the updated residual parameter by scaling an intermediate residual parameter with the updated weight and quantizing the scaled intermediate residual parameter to derive the updated residual parameter according to

$$r_{t+1} = q_r \left( \frac{\widetilde{w}_{t+1} - w_{t+1}}{w_{t+1}} \right) \; if \; w_{t+1} \neq 0$$

$$= 0 \quad else$$

with $r_{t+1}$ denoting the updated residual parameter, $\bar{w}_{t+1}$ denoting the intermediate weight, $w_{t+1}$ denoting the updated weight and $q_r$ denoting a quantization. Additionally, the processing circuit is configured to perform a bit shift operation on the updated residual parameter for scaling the updated residual parameter with the updated weight.

An example is further configured to set updated weights below a threshold to zero.

An additional example is further configured to use fixed point quantization to derive the quantized updated residual parameter.

Another example relates to a computer program having program code for, when executed by a programmable processor, performing the computer-implemented method of training a deep network.

### Brief description of the Figures

Some examples of apparatuses and/or methods will be described in the following by way of example only, and with reference to the accompanying figures, in which

Fig. 1 illustrates an exemplary schematic model of a deep neural network (DNN),

Fig. 2 shows a flowchart illustrating an embodiment of a method for training deep networks,

Fig. 3 illustrates an embodiment of a processing circuit for training deep networks,

Fig. 4 shows results of the application of an embodiment on a convex function of two parameters,

Fig. 5 illustrates the validation accuracy and a histogram of the final weights for training Cifarnet with an embodiment, and

Fig. 6 fig. 5 illustrates a loss landscape plotted along the principal components.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

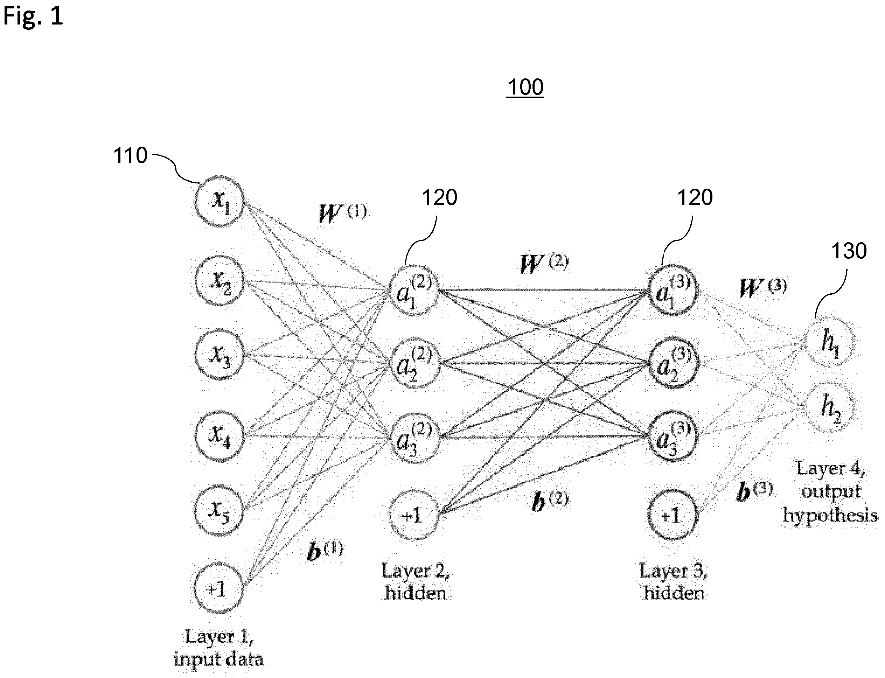

Fig. 1 illustrates an exemplary topology of a Deep Neural Network 100, in particular an example of a deep neural network with an input layer 110, two hidden layers 120 and an output layer 130. The first layer is the input data, and the output layer predicts two response variables. The last node in each input layer (+1) represents a bias term.

Just as an example for a deep neural network, Fig. 1 illustrates a simple form of a fully connected (FC) network where each node of a layer is connected to each node of the preceding layers.

In a simple implementation, each node in the FC network may be defined to be an artificial neuron or perceptron, which receives input, changes its output (activation) according to the input and, optionally, internal parameters (weights).. The output of a neuron of a preceding layer is typically multiplied with a weight before it serves as an input (net input) to a neuron of the subsequent layer. The weights and other parameters of a DNN can be found by training the network.

DNNs used in practice, however, do deviate significantly from the simple example in fig. 1. For example, they are generally not fully connected, i.e. not every node of a layer is connected to each node of the preceding layer. Further, some transformations of nodes within the network may not depend on a trained parameter but be static instead. Likewise, the topology may exhibit multiple variations, e.g. branches may be formed that do not reconnect to subsequent layers at all. Further, some layers may consist of only single nodes while subsequent layers may again have multiple nodes.

In more general terms, Deep Neural Networks (DNNs) are networks of processing layers, which transform a tensor of input data into a sequence of hidden, intermediate representations of the input information to arrive at a resulting tensor of the output layer, which represents an estimation or prediction on the input. This way, DNNs represent universal function approximators, which can principally fit any input distribution into any output distribution.

In general, a layer represents any transformation from input to output. There are, for example, layers that represent a tensor-tensor multiplication (in the sense of Einstein notation: $O_{ij} = A_{ik} \cdot B_{kj} = \sum_k A_{ik} \cdot B_{kj}$). An example of the convolution operation is the (not general) $O_{bxyc} = I_{b(x+i)(y+j)c} \cdot W_{ijCc} = \sum_{i,j,C} I_{b(x+i)(y+j)C} \cdot W_{ijCc}$, where $O$ may be the output (batch, output height, output width, output channels), $I$ the input (batch, input height, input width, input channels) and $W$ the filters/weights (filter height, filter width, input channel, output channel). In fact, this tensor-tensor multiplication layer type is a common case in DNNs.

Activation functions in the nodes of the hidden layers 120 of the DNN are examples for nonlinear, mostly parameter-free transformations. A modern example may be the rectifying linear unit (ReLU): $f(x) = max(0, x)$, where $x$ is the output of a neuron. This ReLU function is also known as a ramp function.

While some nodes of the DNN do not use parameters to be trained, others do. In particular, some nodes use weights that are to be trained before the DNN is used.

If the desired output of a deep neural network given an input is known upfront for some input samples, the deep neural network may be trained by updating the weights in order to minimize the output error. The output known upfront may be called target or label. For minimizing the error efficiently, the weights maybe modified or updated multiple times in an iterative algorithm. This type of learning is generally known as supervised learning.

Neural networks may, for example, be trained by stochastic gradient descent (SGD). During SGD, parameters of each layer, for example the weights associated to a neuron and its threshold are iteratively altered (using a Cost or Loss function C) until the training is finished. The loss Function is an approximation for the quality of the quantity to be optimized, e.g. the accuracy in case of image classification. Training may be based on the error between the expected output and the resulting output (activation) of the final layer. The so trained parameters are used during the inference phase after the training phase.

When training a neural network, the gradient of a cost function C may be calculated with respect to the weights *dC/dW.* This calculation may be performed by using the chain rule to deduce the interesting gradient (*dC/dW = dL/dO · dO/dW*) from the output O of a layer regarding the weights.

The following algorithm describes a single training step to train a DNN for the general case:

$\{$Compute the forward pass$\}$

1: **for k = 1 to L do**

2: $a_k \leftarrow forward_k(a_{k-1}, w_k)$

3: **end for**

$\{$Compute the backward pass with previously computed $a_k\}$

4: $g_{a_L} = \frac{\partial C(a_L, a^*)}{\partial a_L}$

5: **for k = L to 1 do**

6: $g_{a_{k-1}} \leftarrow backward\_input_k(g_{a_k}, w_k)$

7: $g_{w_k} \leftarrow backward\_weight_k(g_{a_k}, a_{k-1})$

8: **end for**

$\{$Apply update based on computed gradients $g_{w_k}\}$

9: **for k = 1 to L do**

10: $w_k^{t+1} \leftarrow update_k(w_k, g_{w_k}, \alpha_t)$

11: **end for**

Training a DNN with L layers may, amongst others, use function *forward_k* for the k\[th\] layer, weights $w_k$, activations $a_k$ and gradients $g_k$. The function $forward_k$ is an abbreviation for the operation taking place when moving from the layer k-1 to layer k, which uses the activations $a_{k-1}$ and the weights $w_k$. C is a cost function used to estimate the quality of an output of the DNN and, optionally, of layers within the DNN. A training step may further require information on the inputs $a_0$, targets/labels $a^*$, previous weights $w^t$ and a learning rate $\alpha_t$.

Lines 1 to 3 of the previous algorithm describe a first phase 1 of a training step. The first phase is to compute a forward pass from layer 1 to layer L, which corresponds to the forward propagation through the network. Forward propagation, in general, may be the process on how to obtain a neural network output, layer by layer. By use of the forward function, an activation $a_k$ of layer k may be obtained out of an activation

$$a_{k-1}^{\square}$$

of previous layer k-1 and a weight

$$w_k^{\square}$$

of layer k.

The second phase (lines 4 to 8 of the pseudo code) is to compute the backward pass from layer L to layer 1 via the previously computed activation $a_k$. The backward pass may correspond to a backpropagation. A backpropagation is about determining how changing the weights may impact the overall cost in the perceptron or neural network. A gradient $g_{a_L}$ may be determined based on the partial derivative of the cost function $\frac{\partial C(a_L, a^*)}{\partial a_L}$ with respect to the activation $a_L$ of layer L. The gradient $g_{a_{k-1}}$ of the previous layer k-1 may be determined based on the gradient $g_{a_k}$ of layer k and the weight

$$w_k^{\square}$$

thereof.

The third phase of a training cycle is given in lines 9 to 11 and updates the weights based on the computed gradients

$$g_{w_k^{\square}}$$

for the layers 1 to L. An updated weight $w_k^{t+1}$ may be determined based on the weight $w_k$, the gradient $g_{w_k}$ thereof and the learning rate $\alpha_t$.

The previously described steps describe the usual procedure for training deep neural networks. The following pseudo code is a modification of the previous one which uses quantized parameters instead of full precision parameters to some extent. In particular, weights, $w_k$ activations $a_k$ and gradients $g_k$ are quantized using quantization functions $q_w$, $q_a$, and $q_g$, respectively.

{Compute the forward pass}

1: **for k = 1 to L do**

2: $w_k^q \leftarrow q_w(w_k)$

3: $a_k \leftarrow forward_k(a_{k-1}^{(q)}, w_k^q)$

4: optional: $a_k^q \leftarrow q_a(a_k)$

5: **end for**

{Compute the backward pass with previously computed $a_k$}

6: $g_{a_L} = \frac{\partial C(a_L, a^*)}{\partial a_L}$

7: **for k = L to 1 do**

8: optional: $g_{a_k}^q \leftarrow q_g(g_{a_k})$

9: $g_{a_{k-1}} \leftarrow backward\_input_k(g_{a_k}^{(q)}, w_k^q)$

10: $g_{w_k^q} \leftarrow backward\_weight_k(g_{a_k}^{(q)}, a_{k-1}^{(q)})$

11: **end for**

{Apply update based on computed gradients $g_{w_k^q}$ }

12: **for k = 1 to L do**

13: optional: $g_{w_k} = g_{w_k^q} \frac{\partial w_k^q}{\partial w_k}$

14: $w_k^{t+1} \leftarrow update_k(w_k, g_{w_k^q}, \alpha_t)$

15: **end for**

While there are quantized parameters used in the modified algorithm given by the previous pseudo code, there still is a full precision copy of the weights required in the learning phase of lines 12 to 15. The weights are only quantized in every iteration for the forward and backward pass.

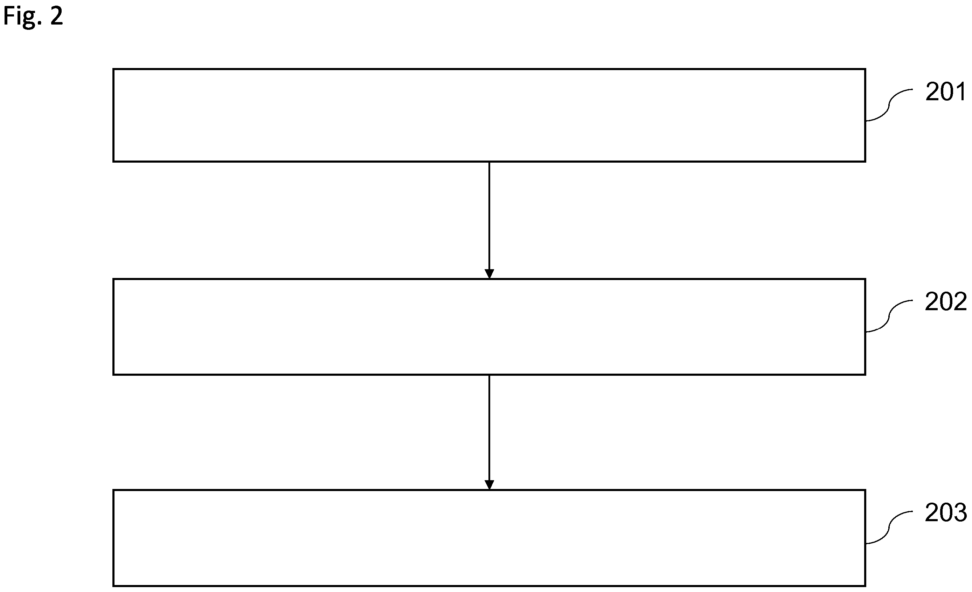

In summary, conventional learning requires high accuracy weights and, hence, costly computations, which may be avoided using an embodiment as illustrated by means of Fig. 2. The embodiments described herein improve the learning phase, i.e. they refer to lines 12 to 15 of the previous code. The embodiments allow to use quantized parameters already in the training phase.

Fig. 2 illustrates a flowchart of a method 200 for training deep networks comprising the steps of calculating 201 an intermediate weight based on an existing quantized weight and an existing quantized residual parameter, quantizing 202 the intermediate weight to derive an updated weight, and generating 203 an updated residual parameter using the intermediate weight and the updated weight.

In the following, a particular example as to how quantized parameters can be used in deep learning will be given.

The following practical implementation is based on the first two phases of the previously described method and modifies the update of phase 3 which now uses a quantized weight. In the following, the index t denotes the number of the iteration within the learning process and the following considerations are to be understood to refer to the same layer k within a DNN.

The method for training deep networks comprises calculating the intermediate weight $\tilde{w}_{t+1}$ based on the existing quantized weight $w_t^q$ and an existing quantized residual parameter $r_t$. The existing quantized residual parameter $r_t$ may be a low precision fixed point variable, which keeps track of the quantization error. The method for training deep networks further comprises quantizing the intermediate weight $\tilde{w}_{t+1}$ to derive the updated weight $w_{t+1}$. The updated weight, hence, is a quantized quantity.

Let $f(x_t, w_t)$ be the Cost function, which in this case may be the loss of the DNN. $x_t$ may be an input sample and $w_t$ is the quantized weight of the network at iteration $t$. One particular way to compute the updated weight $w_{t+1}$ is given below.

$$\tilde{w}_{t+1} = w_t + r_t - \alpha_t \nabla f(x_t, w_t) \qquad (1)$$

$$w_{t+1} = th_\Delta(q_w(\tilde{w}_{t+1})) \qquad (2)$$

First, intermediate weight $\tilde{w}_{t+1}$ is based on an existing quantized weight $w_t$ and on an existing quantized residual parameter $r_t$. Then, the intermediate weight $\tilde{w}_{t+1}$ is quantized using quantization function $q_w$ to derive the updated weight $w_{t+1}$. The updated weight used in the update process, hence, is a quantized quantity. Equation (2) further includes an optional thresholding mechanism $th_\Delta$ for setting updated weights below a threshold to zero, which may serve to further reduce computational load by disregarding insignificant weights.

Further, the method comprises generating an updated residual parameter $r_{t+1}$ using the intermediate weight $\tilde{w}_{t+1}$ and the updated weight $w_{t+1}$.

$$r_{t+1} = q_r \left( \frac{\tilde{w}_{t+1} - w_{t+1}}{w_{t+1}} \right) \; if \; w_{t+1} \neq 0$$
$$= 0 \;\; else. \qquad (3)$$

Equation (3) further implements an additional Quantization $q_r$ of an intermediate residual parameter $(\tilde{w}_{t+1} - w_{t+1})$ to derive the updated residual parameter. The intermediate residual parameter $(\tilde{w}_{t+1} - w_{t+1})$ may be scaled by the updated weight $w_{t+1}$ as in equation (3) or it may be used unscaled. Alternatively, the intermediate residual parameter may likewise also be used unquantized.

Irrespective of the particular choice, $q_w$ and $q_r$ may be two different quantization functions for the weights and the residual parameter $r_r$ which may be seen as an auxiliary variable. The residual may have the same number of elements as the weight vector. In some embodiments, $\nabla f(x_t, w_t)$ may be replaced with a stochastic approximation like in SGD.

In principle, one may choose any quantization method for $q_w$. It may especially be beneficial to quantize weights to a logarithmic scale. The logarithmic quantization may be defined as

$$q_w(x) = sign(x) 2^{\lfloor \log 2 |x| \rfloor}. \qquad (4)$$

The hardware realization of this quantization scheme may be to mask away all bits below the most significant bit (negative numbers may require a slightly modified treatment). In contrast to the formal description of $q_w$ of equation (4), the hardware realization of such masking is very simple. According to some embodiments, therefore, the intermediate weight is quantized using logarithmic quantization.

To deal with the case that the logarithmically quantized weights may be very close to zero, an additional thresholding mechanism may optionally be applied in combination with quantization, which may be described as

$$th_\Delta(x) = \begin{cases} x, & if \ |x| \geq \Delta \\ 0, & else \end{cases}, \tag{5}$$

where $\Delta$ may be the precision of the residual rounding in equation (11). Ignoring small values may have the benefit that the representation of the quantized weights may be reduced to very few bits, enforcing a bound on the weights. In other words, embodiments may optionally further comprise applying a thresholding mechanism after quantizing the intermediate weight to reduce the number of bits consumed.

As illustrated by means of equation (3), the residual may be a quantized variable, too, and requires less size than a high precision copy of the weights. The embodiments disclosed herein may be called residual optimization (ResOpt) after that auxiliary variable. The residuals may have some peculiar properties, which may allow to reduce them to a low precision numerical format. For example, fixed point quantization may optionally be used for the residuals, which is parametrized by the word width w and the fractional width $f$. The formal definition may be

$$q_r(x) = \begin{cases} 2^{w-f-1} & if \ x > 2^{w-f-1} - 2^{-f} \\ -2^{w-f-1} & if \ x < -2^{w-f-1} \\ sign(x) \left\lfloor \frac{x}{2^{-f}} + 0.5 \right\rfloor 2^{-f} & else \end{cases} \tag{6}$$

In simple terms, $x$ may be an integer in two's complement, whereas the last f bits may be interpreted as $2^{-i}$, where $i$ may be the position after the fractional point. The smallest increment may be called the precision $\Delta = 2^{-f}$ of the fixed point number. Also, the number may be truncated to the maximum and minimum representable value, so there may be no overflow. The used rounding scheme may be nearest rounding. In other words, the updated residual parameter may be quantized to use a lower number of bits to represent the updated residual parameter.

As indicated in equation 3, the method optionally further comprises the step of scaling the intermediate residual parameter $(\bar{w}_{t+1} - w_{t+1})$ with the updated weight $w_{t+1}$.

By scaling the intermediate residual parameter with the updated weight, the scaled intermediate residual parameter may store an error in an efficient way by normalizing it by the updated weight. In a further example, the method comprises the step of performing a bit shift operation on the updated residual parameter for scaling the updated residual parameter with the updated weight. Performing bit shift operations for scaling may be computationally inexpensive, and less processing power may be needed compared to multiplication operations.

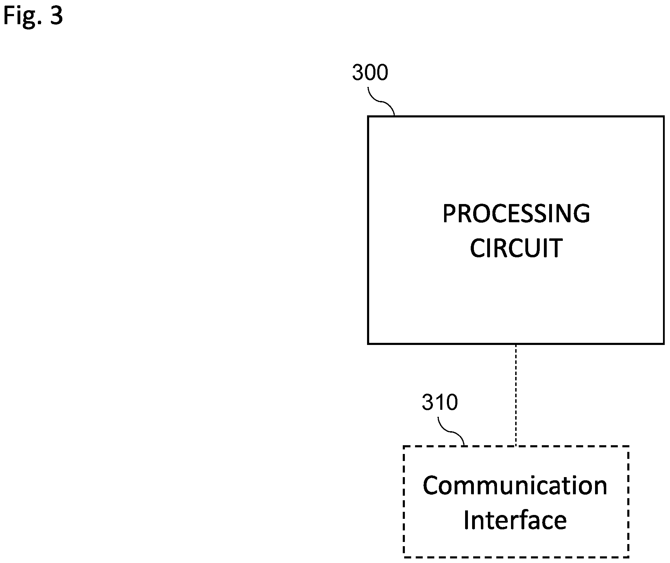

Fig. 3 describes a processing circuit 300 for training deep networks being configured to calculate an intermediate weight based on an existing quantized weight and an existing quantized residual parameter, quantize the intermediate weight to derive an updated weight, and generate an updated residual parameter using the intermediate weight and the updated weight.

An example is further configured to apply a thresholding mechanism after quantizing an intermediate weight to reduce bits of a value thereof.

A further example is further configured to scale the updated residual parameter with the updated weight.

Another example is further configured to perform a bit shift operation on the updated residual parameter for scaling the updated residual parameter with the updated weight.

An optional example is further configured to quantize the updated residual parameter to derive a quantized updated residual parameter.

An additional example is further configured to use fixed point quantization to derive the quantized updated residual parameter.

Another example relates to a computer program having program code for, when executed by a programmable processor, performing the method of training deep networks.

In other words, using deep neural networks (DNN) with quantized variables may make deep learning more efficient with respect to memory usage, computational speed and energy efficiency. Training DNNs with quantized variables may result in models with the same accuracy as their unquantized counterparts. Modern hardware accelerators may be harnessing this potential by enabling calculations in low precision formats. However, most of the low precision hardware acceleration may target the inference phase, which may numerically be more robust to low precision computations than the training phase. So far, only few approaches aim at enabling low precision during training. Existing methods may suffer from the need to keep at least one high precision copy of the DNN weights during gradient updates. In contrast, the residual optimization (ResOpt) scheme may facilitate training with fully quantized weights. It may also replace the multiplication with weights by bit shifts, leading to a major speed-up during training and inference. Thus, new insights may be provided on the nature of training with quantized variables and may open up a new perspective on how to design hardware accelerators for deep neural networks.

A corresponding update scheme may not need a high precision representation of the weights to train a DNN. The key may be to use a low precision fixed point variable called the residual, which may be bound by [0, 1), that may keep track of the quantization error. After the training, the residual may be discarded without any changes to the model. Additionally, it may use weights which are powers of 2, which may be beneficial for the hardware design of custom accelerators.

The key points may in this regard be use of a novel, bit shift based optimizer scheme for DNNs with logarithmic scale weights, which does not hold on to a set of latent, high precision weights during training.

The following paragraphs give an analysis of the convergence behavior of the suggested method and some insights to the loss landscape of DNNs with quantized variables.

The convergence analysis is based on (H. Li et al. "Training quantized nets: A deeper understanding," in Advances in Neural Information Processing Systems, pp. 5811-5821, 2017), but takes the composition of two previously introduced quantization schemes into consideration.

$$F(w) = \frac{1}{n} \sum_{i=1}^{n} f_i(w)$$

Theorem 1: Suppose $F(w) = \frac{1}{n} \sum_{i=1}^{n} f_i(w)$ is a sum of convex, L-Lipschitz smooth functions, with $L_2$-Lipschitz smooth Hessians $\nabla^2 f_i$, the domain has finite diameter D, the variance of the gradient is bounded, i.e.

$$\mathbb{E}\|f_i(\cdot)\|^2 \le G^2$$

, the coordinate values of weights do not exceed $w_{max}$, the quantization step $\Delta$ for residuals is a power of 2, and learning rates are given by $\alpha t = \frac{c}{\sqrt{t}}$, then the following is true for an ergodic estimate $\widetilde{w}(T) = \frac{1}{T} \sum_{t=1}^{T} \widetilde{w}_t$ at time *T,* generated by the unscaled ResOpt algorithm:

$$\mathbb{E}[F(\widetilde{w}(T)) - F(w^*)] \le \frac{D^2}{2c\sqrt{T}} + \frac{c\sqrt{T+1}}{2T}G^2 + DL\sqrt{d}w_{max} + \frac{1}{2}DL_2\sqrt{d}\Delta G + \sqrt{2d}\Delta G$$

where w* = $argmin_w F(w)$ and d is the dimension of *w*.

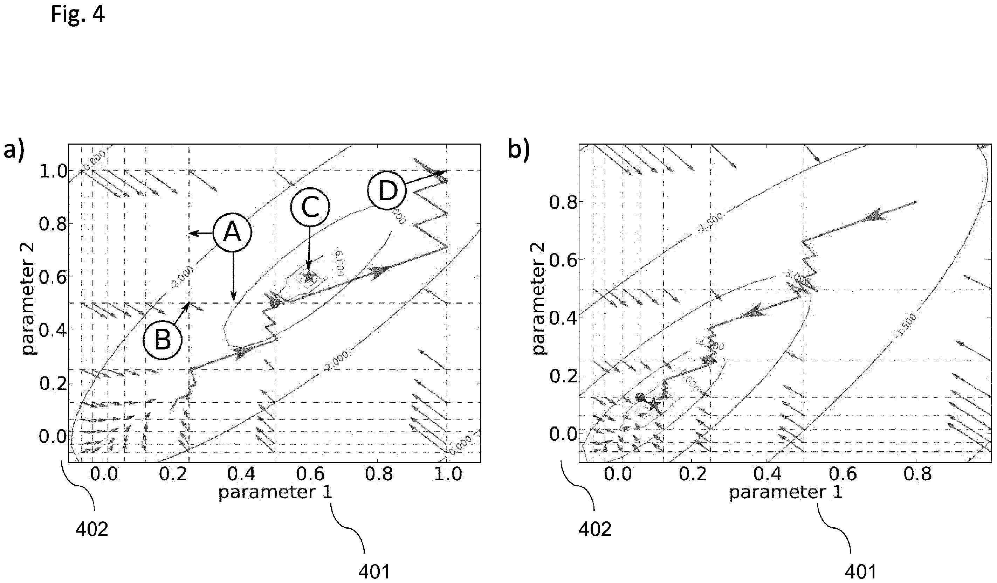

A simple example of a convex function of two parameters may explain some peculiarities in quantized training methods, which may be seen in DNN training space as well. Fig. 4 shows two examples of poorly conditioned, convex functions of two parameters 401, 402. The ResOpt method may be used to find the optimum of these functions. The weights may be quantized logarithmically in ResOpt, which may be visualized by the grid lines (A) in the plots. In the rectangular regions framed by lines, the weights may be quantized to the same value, which may lie at the bottom left corner of a region. An arrow (B) in every corner may describe the gradient at that point. It is important to note that this gradient may be valid for all points in the region. Therefore, the trajectory may follow (B) in a straight line. When the trajectory crosses the boundary to another region, it may either bounce back or may continue crossing the new region. Yet even when bouncing back and forth, the overall trajectory may move along the boundary. Finally, the trajectory may reach the region which may contain the optimum (C). However, it may not stop, but may continue moving towards (D). It is important to note that in these examples, the learning rate may be chosen such that the trajectory may never skip over an entire cell. Nevertheless, the general idea of how quantized deep learning may work may remain the same.

A circuit which may move bit patterns by a limited, but variable number of positions to the left or right by padding with zeros or ones may be called a bit shifter. Using bit shifters instead of multiplier or divider circuits may result in a large speedup if the hardware architecture can be customized, as it may be the case in FPGAs. Due to techniques known as instruction level parallelism, a modern processor may easily return one multiplication result per clock cycle. So the time until an instruction may finish may not be a good measure of speed for modern processors. Speedup on processors may be gained by allowing to issue multiple of the same instruction per cycle. In hardware, this may require several copies of the circuit which may carry out the instruction. Since the space on a chip may be limited, a smaller circuit may allow for more copies to fit into the chip, allowing for a higher degree of parallelism. A good proxy for the size of a digital circuit may be the number of logic gates it may require to be implemented in hardware.

Multiplication with a number which may be a power of two $2^k$ (with $k \in Z$) may be the same as shifting the binary representation of that number by $|k|$ bits. A barrel shifter may be a circuit which may shift a bit pattern by a variable, but limited amount of bits in a single clock cycle. Therefore, when multiplying with power of 2 numbers, it may be a substitution for a conventional multiplier circuit. Barrel shifters may be implemented with a number of gates in the order of *O(n log n),* with n the number of bits for an operand. A simple, one-directional realization may be built with $3n \log_2(n)$ gates.

A conventional integer multiplier needs $O(n^2)$ gates and a concrete realization may be implemented with $6n^2 - 8n$

gates. Table 1 compares the two circuits for some operand sizes. The ratio of the gate numbers may be a good approximation for the expected speedup. Compared to floating point multiplier circuits, the speedup may be even more substantial, as that circuit may include at least both a fixed point multiplier and a bit shifter (for normalization).

Table 1: Comparison of circuit size measured in the number of gates for shifter and multiplier. The bitwidth refers to the number of bits for an operand.

| bitwidth ($n$) | 4 | 8 | 16 | 32 |
|---|---|---|---|---|
| shifter ($3n \log_2 (n)$) | 24 | 72 | 192 | 480 |
| multiplier ($6n^2 - 8n$) | 64 | 320 | 1408 | 5888 |
| ratio | 2.7 | 4.4 | 7.3 | 12.3 |

The topologies used in experiments may be Cifarnet ("Cifarnet code," 2016. access: 2019-05-22, "https://github.com/tensorflow/models/blob/master/research/slim/nets/cifarnet.py"), which may be an AlexNet (A. Krizhevsky et al. "Imagenet classification with deep convolutional neural networks," in Advances in neural information processing systems, pp. 1097-1105, 2012) like neural network with roughly 1.8 million weights and Alexnet. They may be trained on Cifar10 (A. Krizhevsky and G. Hinton, "Learning multiple layers of features from tiny images," tech. rep., Citeseer, 2009.) and Imagenet (J. Deng et al. "ImageNet: A Large-Scale Hierarchical Image Database," in CVPR09, 2009.), respectively. The experiments may use the ResOpt variant with scaled residuals, if not mentioned otherwise. The experiments which may not use ResOpt use stochastic gradient descend (SGD) without momentum, because it may be the most similar optimizer to ResOpt. The baseline training may use floating point 32 bits numbers and the hyper-parameters may be the same as for the quantized training. The main metric may be the accuracy of the classifier evaluated on the validation dataset. All experiments may start from the same random initialization point. The model for Cifar10 may be trained for 200 epochs, using an initial learning rate of 0.1 and halving it every 40 epochs. AlexNet may be trained for 50 epochs, using an initial learning rate of 0.1 and halving it every 10 epochs. The framework used for all experiments may be TensorFlow, using quantization operations from the Tensorquantemulation toolbox.

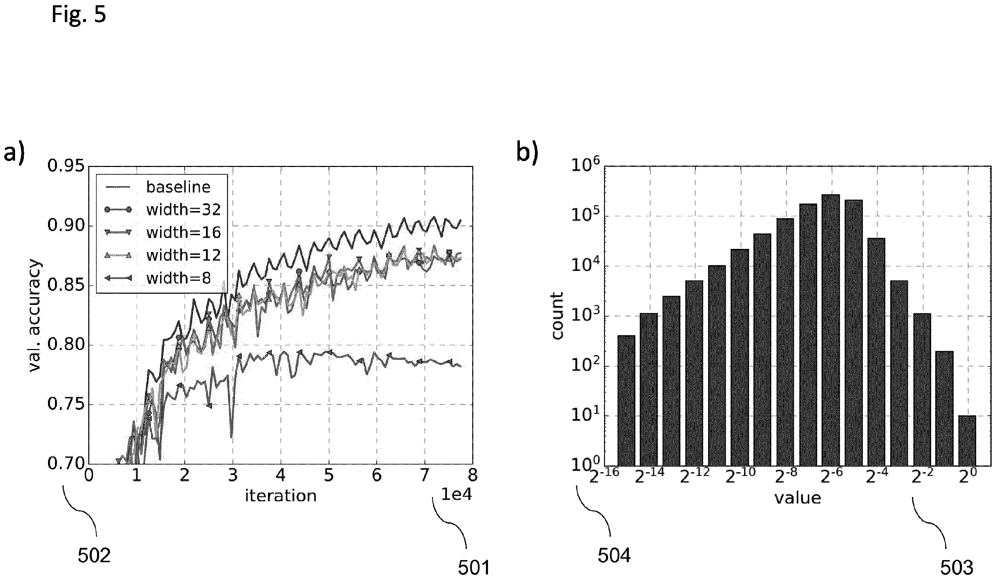

Fig. 5a shows the validation accuracy 502 over the training steps 501 for different residual quantizers. The key may be to use a low precision fixed point variable called the residual, which may be bound by [0, 1) that may keep track of the quantization error. Therefore, the fractional part may be set to $f = w - 1$. The baseline accuracy may be at 90.5 % after 200 epochs. The training being run with ResOpt may be about 3 % below the baseline. Notice that the gap between the baseline and ResOpt may become larger every time the learning rate may be halved, for example around iteration $3 \times 10^4$. The baseline method may be benefiting from the learning rate schedule more than ResOpt. Down to 12 bits, the residual based method may result in similar accuracies. At 8 bits, there may be a sharp drop in accuracy. The accuracy values between 8 and 12 bits may be given in Table 2. A residual width of 11 bits may be sufficient to achieve a final accuracy of 87 %.

Table 2: Comparison of training with scaled residuals and unscaled residuals.

| word width w | 32 | 16 | 12 | 11 | 10 | 9 | 8 | 6 |
|---|---|---|---|---|---|---|---|---|
| scaled res. accuracy (%) | 87.2 | 87.7 | 87.3 | 86.9 | 85.1 | 82.4 | 78.2 | 60.2 |
| unscaled res. accuracy (%) | 87.4 | 85.4 | 67.1 | 52.6 | 38.6 | 27.4 | 12.8 | 10.6 |

The same table shows the difference to the unscaled version. For high bit width, the scaled and unscaled variants may produce similar results. But going to 16 bits and below, the accuracy drops.

The weight histogram of all weights in the neural network trained with 16 bits residuals may be shown in Fig. 5b, which shows the count 504 over the value 503. The lower boundary at the values $2^{-15}$ may be enforced by the thresholding mechanism in eq. (12). There may be no weights greater than one, so all weights may be encoded in logarithmic scale with 5 bits signed integers.

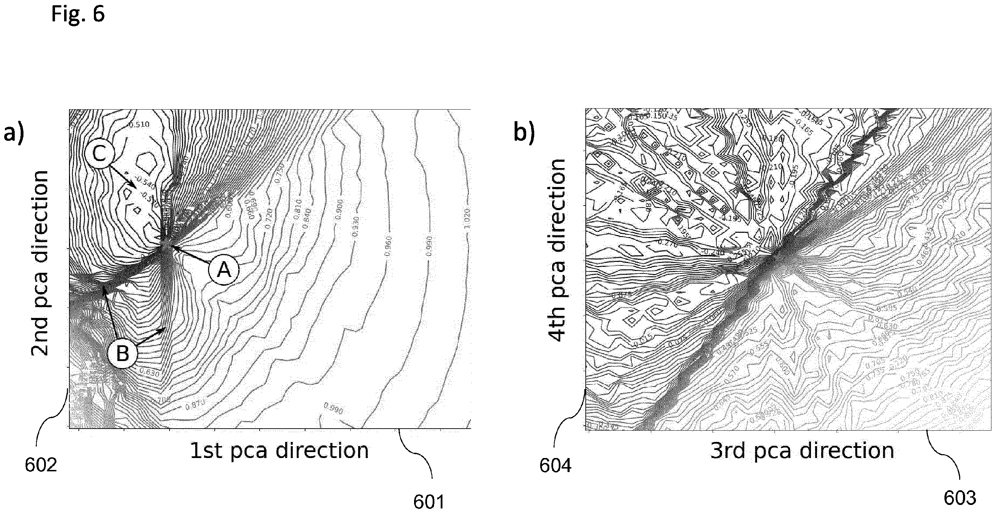

As mentioned in the methods, the convergence behavior of quantized training methods may be different from standard SGD. Fig. 6a and 6b show the loss landscape of a DNN trained on Cifar10. The plots may be centered on the final weights, marked by a red star (A). The directions in weight space 601, 602, 603 and 604 may be the principal components calculated from 25 snapshots of the weights during the entire training run. The weights at every point in the plot may be always quantized down to be power of 2 and the loss may be plotted in the logarithmic scale. The trajectory itself may not convey any insights, so they may not be present on the plots. The thresholds where the logarithmic quantization may jump from one value to the other may be visible as steps in the loss landscape (B). As described previously, the training trajectory may jump around a threshold, which may be the reason they become visible in the principal component analysis. These transitions may not always be visible, since they may be smoothed out due to the grid granularity in high dimensional spaces. Further, the trajectory may not end in a sink of the loss landscape (C). It gets stuck at an intersection between threshold lines (B), which may be similar to what may be observed in the toy example in Fig. 4. The final weights may be close to a region of relatively low loss (C).

Table 3: Comparison of validation accuracy (%) of Cifarnet with fixed point weights trained with a latent, high precision representation of the weights, without one and trained with ResOpt.

| weight width | 32 | 16 | 12 | 8 | 6 |
|---|---|---|---|---|---|
| latent | 90.2 | 90.8 | 90.2 | 90.0 | 89.2 |
| no latent | 90.0 | 87.3 | 66.2 | 22.9 | 16.4 |
| **ResOpt** | 87.2 | 87.7 | 87.3 | 78.2 | 60.2 |

To further demonstrate the impact of the latent high precision weights, Table 3 shows training runs for update schemes with a latent copy, without a latent copy and with ResOpt. The latent and non-latent runs may use fixed point weights. The gradients may be accumulated in the form of fixed point residuals in the case of ResOpt, so to compare against fixed point quantization may be fair. The fractional part may again be $f = w - 1$, which may be a good choice for this problem. The fixed point training may be similar to the technique in DoReFa-Net (S. Zhou et al., "Dorefa-net: Training low bitwidth convolutional neural networks with low bitwidth gradients", arXiv preprint arXiv:1606.06160, 2016), but may use simple straight-through estimators for the gradients in the backward propagation. The latent fixed point training may do well throughout all the different weights.

In the non-latent fixed point training, the weights may be quantized right after the update is applied. The consequence may be that small incremental changes to the weights vanish in the quantization. Therefore, 12 bit training may already be failing for the non-latent representation. It may become evident that the latent representation may help a lot in training the quantized DNNs.

ResOpt may be the first method which omits the latent representation successfully, opening up new possibilities to implement the update step on custom hardware accelerators. It may achieve similar accuracies as other existing optimization schemes for quantized weights, but with a much simpler update scheme. The key to the ResOpt method may be the scaled residuals. They may store the error made by the quantization in an efficient way by normalizing it by the weight. An analysis of the convergence behavior of the proposed method may be given. ResOpt may further use power of 2 weights, which may allow to replace multiplications with bit shifts. This, in combination with the lack of latent high precision weights may open up a way to design asynchronous, distributed training on custom hardware accelerators such as FPGAs.

Customizable hardware may be designed such that it may handle quantized numbers very efficiently and speed up computation. Devices called field programmable gate arrays (FPGAs) may allow to relatively quickly implement a custom hardware architecture. The literature on the combination of FPGAs with DNNs is currently focusing on accelerating the inference phase, but there is some literature about training on FPGAs as well. There are no strong technical bounds limiting the use of FPGAs as alternative accelerators for DNN training, similar to how graphical processing units (GPU) are used.

Another important factor in the training of DNNs is how to train on distributed platforms. The most common approach may be to keep a central copy of the model weights on a parameter server and to broadcast the updated versions to workers. The gradients may be gathered by the parameter server from the workers and the updated model is again broadcasted. Such an update scheme is synchronous, since all workers have the same set of weights at all times.

Asynchronous approaches may allow for the individual worker models to diverge to some degree. In an approach, called Hogwild! approach (B. Recht, et al., "Hogwild: A lock-free approach to parallelizing stochastic gradient descent,", Advances in neural information processing systems, pp. 693-701, 2011), a worker may send its updates to a small subset of other workers instead to a central parameter server. This approach is much less deterministic, but has proven to converge in less time, since workers spend no time waiting for updates. An important difference is that the workers may need to apply their updates locally in the asynchronous scheme. A novel approach in HPC clusters may be to use special accelerator hardware for the workers. This could be a GPU cluster like the Oakridge 44 Summit or a FPGA cluster like IBM's cloudFPGA platform. Combining asynchronous schemes with clusters built from special accelerator hardware, the entire update scheme may be representable in the numerical representation which the worker architecture supports.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F) PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or steps, respectively. Such sub acts may be included and part of the disclosure of this single act unless explicitly excluded.

**Claims**

1. A computer-implemented method (200) for training a deep network, comprising:

calculating (201) an intermediate weight based on an existing quantized weight of a layer of the deep network and an existing quantized residual parameter;
deriving an updated weight by quantizing (202) the intermediate weight, wherein the updated weight is a quantized quantity; and
generating (203) an updated residual parameter using the intermediate weight and the updated weight, wherein generating (203) the updated residual parameter comprises scaling an intermediate residual parameter with the updated weight and quantizing the scaled intermediate residual parameter to derive the updated residual parameter according to

$$r_{t+1} = q_r \left( \frac{\widetilde{w}_{t+1} - w_{t+1}}{w_{t+1}} \right) \; if \; w_{t+1} \neq 0$$
$$= 0 \quad else$$

with $r_{t+1}$ denoting the updated residual parameter, $\widetilde{w}_{t+1}$ denoting the intermediate weight, $w_{t+1}$ denoting the updated weight and $q_r$ denoting a quantization, and wherein scaling the intermediate residual parameter comprises performing a bit shift operation on the intermediate residual.

2. The computer-implemented method (200) of claim 1, wherein the intermediate weight is quantized using logarithmic quantization.

3. The computer-implemented method (200) of claims 1 and 2, further comprising:
setting the updated weight to zero if it is below a threshold.

4. The computer-implemented method of any one of claims 1 to 3, comprising:
using fixed point quantization to derive the updated residual parameter.

5. A processing circuit (300) for training a deep network, configured to:

calculate an intermediate weight based on an existing quantized weight of a layer of the deep network and an existing quantized residual parameter;
derive an updated weight by quantizing the intermediate weight, wherein the updated weight is a quantized quantity;
generate an updated residual parameter using the intermediate weight and the updated weight by scaling an intermediate residual parameter with the updated weight and quantizing the scaled intermediate residual parameter to derive the updated residual parameter according to

$$r_{t+1} = q_r \left( \frac{\widetilde{w}_{t+1} - w_{t+1}}{w_{t+1}} \right) \; if \; w_{t+1} \neq 0$$
$$= 0 \quad else$$

with $r_{t+1}$ denoting the updated residual parameter, $\widetilde{w}_{t+1}$ denoting the intermediate weight, $w_{t+1}$ denoting the updated weight and $q_r$ denoting a quantization; and
perform a bit shift operation on the intermediate residual parameter for scaling the intermediate residual parameter.

6. The processing circuit (300) of claim 5, further configured to:
set the updated weight to zero if it is below a threshold.

7. The processing circuit (300) of claim 5 or claim 6, configured to:
use fixed point quantization to derive the quantized updated residual parameter.

8. A computer program having program code which, when executed by a programmable processor, causes the processor to perform the computer-implemented method of one of claims 1 to 4.

**Patentansprüche**

1. Ein computerimplementiertes Verfahren (200) zum Trainieren eines tiefen Netzwerks, umfassend:

Berechnen (201) einer Zwischengewichtung basierend auf einer existierenden quantisierten Gewichtung einer Schicht des tiefen Netzwerks und einem existierenden quantisierten Restparameter;
Ableiten einer aktualisierten Gewichtung durch Quantisieren (202) der Zwischengewichtung, wobei die aktualisierte Gewichtung eine quantisierte Größe ist; und
Erzeugen (203) eines aktualisierten Restparameters unter Verwendung der Zwischengewichtung und der aktualisierten Gewichtung, wobei das Erzeugen (203) des aktualisierten Restparameters ein Skalieren eines Zwischenrestparameters mit der aktualisierten Gewichtung und ein Quantisieren des skalierten Zwischenrestparameters umfasst, um den aktualisierten Restparameter abzuleiten gemäß

$$r_{t+1} = q_r \left( \frac{\widetilde{w}_{t+1} - w_{t+1}}{w_{t+1}} \right) \; if \; w_{t+1} \; \neq 0$$
$$= 0 \quad else$$

wobei $r_{t+1}$ den aktualisierten Restparameter bezeichnet, $\tilde{w}_{t+1}$ die Zwischengewichtung bezeichnet, $w_{t+1}$ die aktualisierte Gewichtung bezeichnet und $q_r$ eine Quantisierung bezeichnet, und wobei das Skalieren des Zwischenrestparameters ein Durchführen einer Bitverschiebungsoperation an dem Zwischenrest umfasst.

2. Das computerimplementierte Verfahren (200) gemäß Anspruch 1, wobei die Zwischengewichtung unter Verwendung einer logarithmischen Quantisierung quantisiert wird.

3. Das computerimplementierte Verfahren (200) gemäß den Ansprüchen 1 und 2, ferner umfassend:
Einstellen der aktualisierten Gewichtung auf null, wenn sie unter einer Schwelle liegt.

4. Das computerimplementierte Verfahren gemäß einem der Ansprüche 1 bis 3, umfassend:
Verwenden einer Festkommaquantisierung, um den aktualisierten Restparameter abzuleiten.

5. Eine Verarbeitungsschaltung (300) zum Trainieren eines tiefen Netzwerks, die ausgebildet ist zum:

Berechnen einer Zwischengewichtung basierend auf einer existierenden quantisierten Gewichtung einer Schicht des tiefen Netzwerks und einem existierenden quantisierten Restparameter;
Ableiten einer aktualisierten Gewichtung durch Quantisieren der Zwischengewichtung, wobei die aktualisierte Gewichtung eine quantisierte Größe ist;
Erzeugen eines aktualisierten Restparameters unter Verwendung der Zwischengewichtung und der aktualisierten Gewichtung durch Skalieren eines Zwischenrestparameters mit der aktualisierten Gewichtung und Quantisieren des skalierten Zwischenrestparameters, um den aktualisierten Restparameter abzuleiten gemäß

$$r_{t+1} = q_r \left( \frac{\widetilde{w}_{t+1} - w_{t+1}}{w_{t+1}} \right) \; if \; w_{t+1} \; \neq 0$$
$$= 0 \quad else$$

wobei $r_{t+1}$ den aktualisierten Restparameter bezeichnet, $\tilde{w}_{t+1}$ die Zwischengewichtung bezeichnet, $w_{t+1}$ die aktualisierte Gewichtung bezeichnet und $q_r$ eine Quantisierung bezeichnet; und
Durchführen einer Bitverschiebungsoperation an dem Zwischenrestparameter zum Skalieren des Zwischenrestparameters.

6. Die Verarbeitungsschaltung (300) gemäß Anspruch 5, die ferner ausgebildet ist zum:
Einstellen der aktualisierten Gewichtung auf null, wenn sie unter einer Schwelle liegt.

7. Die Verarbeitungsschaltung (300) gemäß Anspruch 5 oder Anspruch 6, die ausgebildet ist zum:
Verwenden einer Festkommaquantisierung, um den quantisierten aktualisierten Restparameter abzuleiten.

8. Ein Computerprogramm mit einem Programmcode, der, wenn er durch einen programmierbaren Prozessor ausgeführt wird, den Prozessor veranlasst, das computerimplementierte Verfahren gemäß einem der Ansprüche 1 bis 4 durchzuführen.

**Revendications**

1. Procédé mis en œuvre par ordinateur (200) pour l'apprentissage d'un réseau profond, comprenant le fait de :

calculer (201) un poids intermédiaire sur la base d'un poids quantifié existant d'une couche du réseau profond et d'un paramètre résiduel quantifié existant ;

dériver un poids mis à jour en quantifiant (202) le poids intermédiaire, le poids mis à jour étant une quantité quantifiée ; et

générer (203) un paramètre résiduel mis à jour en utilisant le poids intermédiaire et le poids mis à jour, la génération (203) du paramètre résiduel mis à jour comprenant une mise à l'échelle d'un paramètre résiduel intermédiaire avec le poids mis à jour et une quantification du paramètre résiduel intermédiaire mis à l'échelle pour dériver le paramètre résiduel mis à jour selon

$$r_{t+1} = q_r \left( \frac{\widetilde{w}_{t+1} - w_{t+1}}{w_{t+1}} \right) \; if \; w_{t+1} \; \neq 0$$
$$= 0 \quad else$$

$r_{t+1}$ désignant le paramètre résiduel mis à jour, $\widetilde{w}_{t+1}$ désignant le poids intermédiaire, $w_{t+1}$ désignant le poids mis à jour et $q_r$ désignant une quantification, et la mise à l'échelle du paramètre résiduel intermédiaire comprenant une exécution d'une opération de décalage de bit sur le résiduel intermédiaire.

2. Procédé mis en œuvre par ordinateur (200) selon la revendication 1, dans lequel le poids intermédiaire est quantifié en utilisant une quantification logarithmique.

3. Procédé mis en œuvre par ordinateur (200) selon les revendications 1 et 2, comprenant en outre le fait de :
régler le poids mis à jour à zéro s'il est inférieur à un seuil.

4. Procédé mis en œuvre par ordinateur selon l'une des revendications 1 à 3, comprenant le fait de :
utiliser une quantification à point fixe pour dériver le paramètre résiduel mis à jour.

5. Circuit de traitement (300) pour l'apprentissage d'un réseau profond, configuré pour :

calculer un poids intermédiaire sur la base d'un poids quantifié existant d'une couche du réseau profond et d'un paramètre résiduel quantifié existant ;

dériver un poids mis à jour en quantifiant le poids intermédiaire, dans lequel le poids mis à jour est une quantité quantifiée ;

générer un paramètre résiduel mis à jour en utilisant le poids intermédiaire et le poids mis à jour en mettant à l'échelle un paramètre résiduel intermédiaire avec le poids mis à jour et en quantifiant le paramètre résiduel intermédiaire mis à l'échelle pour dériver le paramètre résiduel mis à jour selon

$$r_{t+1} = q_r \left( \frac{\widetilde{w}_{t+1} - w_{t+1}}{w_{t+1}} \right) \; if \; w_{t+1} \; \neq 0$$
$$= 0 \quad else$$

$r_{t+1}$ désignant le paramètre résiduel mis à jour, $\widetilde{w}_{t+1}$ désignant le poids intermédiaire, $w_{t+1}$ désignant le poids mis à jour et $q_r$ désignant une quantification ; et

exécuter une opération de décalage de bit sur le paramètre résiduel intermédiaire pour mettre à l'échelle le paramètre résiduel intermédiaire.

6. Circuit de traitement (300) selon la revendication 5, configuré en outre pour :
régler le poids mis à jour à zéro s'il est inférieur à un seuil.

7. Circuit de traitement (300) selon la revendication 5 ou la revendication 6, configuré pour :
utiliser une quantification à point fixe pour dériver le paramètre résiduel mis à jour quantifié.

8. Programme d'ordinateur ayant un code de programme qui, lorsqu'il est exécuté par un processeur programmable, amène le processeur à exécuter le procédé mis en œuvre par ordinateur selon l'une des revendications 1 à 4.

Fig. 1

100

Fig. 2

201

202

203

Fig. 3

300

PROCESSING
CIRCUIT

310

Communication
Interface

EP 3 745 314 B1

Fig. 4

a)

b)

402

401

402

401

EP 3 745 314 B1

Fig. 5

a)

b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018211166 A1

**Non-patent literature cited in the description**

- **H. LI et al.** Training quantized nets: A deeper understanding. Advances in Neural Information Processing Systems, 2017, 5811-5821
- *Cifarnet code*, 2016, https://github.com/tensorflow/-models/blob/master/research/slim/nets/cifarnet.py
- **A. KRIZHEVSKY et al.** Advances in neural information processing systems. *Imagenet classification with deep convolutional neural networks*, 2012, 1097-1105
- **A. KRIZHEVSKY ; G. HINTON**. Learning multiple layers of features from tiny images. *Citeseer*, 2009
- **J. DENG et al.** ImageNet: A Large-Scale Hierarchical Image Database. *CVPR09*, 2009
- **S. ZHOU et al.** *Dorefa-net: Training low bitwidth convolutional neural networks with low bitwidth gradients*, 2016
- **B. RECHT et al.** Hogwild: A lock-free approach to parallelizing stochastic gradient descent. *Advances in neural information processing systems*, 2011, 693-701